# EUROPEAN PATENT SPECIFICATION

(11) **EP 2 841 835 B1**
(45) Date of publication and mention of the grant of the patent: **27.02.2019**
(21) Application number: 13760929.3
(22) Date of filing: 14.03.2013
(51) Int. Cl.: F16L 9/128, B29C 47/06, B29C 70/08, F16L 1/12, F16L 9/19, B29C 70/52, F16L 11/04, B29D 23/00, B32B 1/08, B29C 53/58, B29C 53/68

(54) **MULTILAYER PIPELINE IN A POLYMER MATERIAL, DEVICE FOR MANUFACTURE OF THE MULTILAYER PIPELINE AND A METHOD FOR MANUFACTURING THE MULTILAYER PIPELINE**
MEHRSCHICHTIGE ROHRLEITUNG IN EINEM POLYMERMATERIAL, VORRICHTUNG ZUR HERSTELLUNG DER MEHRSCHICHTIGEN ROHRLEITUNG UND VERFAHREN ZUR HERSTELLUNG DER MEHRSCHICHTIGEN ROHRLEITUNG
CANALISATION MULTICOUCHE EN UN MATÉRIAU POLYMÈRE, DISPOSITIF POUR LA FABRICATION DE LA CANALISATION MULTICOUCHE ET PROCÉDÉ POUR LA FABRICATION DE LA CANALISATION MULTICOUCHE

(30) Priority: 14.03.2012 NO 20120302
(43) Date of publication of application: 04.03.2015
(73) Proprietor: Purapipe Holding Ltd., 3106 Limassol (CY)
(72) Inventor: OPHAUG, Arvid, N-7549 Tanem (NO)
(74) Representative: Onsagers AS
(86) International application number: PCT/NO2013/050051
(87) International publication number: WO 2013/137745

(56) References cited:
- EP-A2- 2 233 811
- WO-A1-01/16515
- WO-A1-91/00466
- WO-A1-94/24473
- WO-A1-97/22827
- WO-A1-99/19653
- WO-A1-2006/097765
- WO-A1-2010/150039
- WO-A1-2011/128545
- CA-A1- 1 068 622
- CA-A1- 2 209 961
- GB-A- 2 076 105
- GB-A- 2 077 880
- JP-A- S5 597 948
- US-A- 3 740 958
- US-A- 4 515 737
- US-A- 5 706 865
- US-A- 5 755 266
- US-A- 5 770 313
- US-A- 6 004 639
- US-A1- 2003 056 845
- US-A1- 2008 006 337
- US-A1- 2009 107 558
- US-B1- 6 179 008
- US-B1- 6 516 833

## Description

The invention relates to a multilayer pipeline for transporting petroleum products, in particular for oil and gas, and for transporting CO₂ gas, either offshore or onshore. The invention also relates to a device and a method for manufacturing the multilayer pipeline. More particularly, the invention relates to a continuous multilayer pipeline made by a combination of extruded plies and fibre-wrapped plies.

For the transport of oil and gas and CO₂ gas offshore and onshore, plastic composite pipes and pipes that include a metal, generally steel or a steel alloy, are used today.

In risers and intra-field transport, it is known to use non-metallic pipelines in some cases. These are composite pipes which are composed of one or more polymers, and which are flexible pipes with diameters limited up to 150 millimetres. In downstream pipeline transport, that is to say from a production field to shore, and also further transport in transport pipelines from a refinery onshore or some other type of onshore facility, the amount of oil and gas is very large and steel-pipe solutions are used exclusively. Owing to the large pipe dimensions, such transport pipes are not manufactured from other materials. The transport of CO₂ gas also requires large pipe dimensions.

Plastic composites are composite materials in which a plastic is combined with other substances or materials that are insoluble in the plastic. The plastic composites generally consist of a base mass of a homogenous plastic, often called the matrix, and in this, particles, flakes, fibres, fibre products, filaments or the like of another material or of another type of plastic are embedded. In such composite materials, the good qualities of the individual components are combined and often enhanced. Typical plastic composites are different types of reinforced plastic.

Pipelines formed of plastic composites may be produced as flexible pipes, in which the fibre is not impregnated by the surrounding matrix but lies dry between plies or layers consisting of a plastic matrix. Pipes in which the fibre is wetted by a plastic material make more rigid pipes.

Flexible plastic composite pipelines are produced in long lengths. In practice, the possibility of transporting the pipe will restrict the overall length of the flexible pipe, like the overall reel diameter, for example. This also means that a large-diameter pipe will be shorter than a small-diameter pipe. In the art, flexible pipes of this kind with a diameter of up to 150 millimetres are known.

Rigid plastic composite pipes have restricted lengths. The length is determined by the production tool, and the pipes are typically 12-20 metres long. Such pipes are produced with various forms of flanges. The pipes are joined together at the flanges in a known manner. Flange gaskets prevent leakages at the joints. Such pipes are used only onshore. Laying a pipeline offshore entails such a great strain on the pipeline that joints with flanges and seals will involve a great risk of damage to the joints/pipeline, which may result in leakages.

It is known within the art that plastic composite pipelines may cause problems during depressurization. This problem is greatest by high operating pressures, typically by the transport of hydrocarbon gas or CO₂ gas. The pressure may be in the area of 250 bars, by which hydrocarbon gas / CO₂ may penetrate the inner material of the pipeline, called liner, and build up a gas pressure on the outside of the liner. By depressurization of the gas medium inside the liner, the pressure on the outside of the liner will be larger than the pressure inside the liner. This may result in a collapse of the liner in the pipeline. Such a collapse of the liner will result in the pipeline becoming unusable.

Corrosion is a problem in pipelines of steel and partially large amounts of chemicals are added to the petroleum products to prevent internal corrosion in the pipelines. The petroleum products may also contain particulate material that works as an abradant on the internal jacket surface of the pipe. When such pipelines in steel are formed, a metal alloy is selected relative to the desired corrosion resistance, and the wall thickness of the pipe is dimensioned on the basis of the expected internal wear.

An outer insulating coating may be applied to such metal pipes. First, a thin ply of epoxy is applied to the outer surface of the pipe to avoid corrosion if there is ingress of water through the outer insulating ply. The insulating ply is applied to the pipe by means of an extrusion technique.

In alternative embodiments, the pipes may internally be lined with an insulating ply and, nearest to the centre, a wear ply. It is known that the innermost ply may consist of a metal pipe. The manufacturing of such pipes is carried out by the pipes being made individually in fixed lengths, for example of 20 m. The insulating ply is inserted into the pipe. In pipes that are composed of an outer pipe and an inner pipe, the insulating ply is squeezed into the annular space between the two concentric pipes.

The completed pipe lengths are joined together by welding. Special work operations must be performed for the insulating material to overlap in the joint area. Pipes with an outer insulating ply are stripped of coating at the pipe ends in a grinding robot before being welded together. After the welding-together, each weld is checked. Then an outer insulation is applied to the weld area in a manual operation. Such assembling of individual pipes into longer pipe strings may be carried out onshore. Pipe strings of, for example, 800 m may then be formed. These are stored side by side in the wait of a pipe-lay vessel to arrive and load the pipe strings. The pipe-lay vessel will reel the pipe strings onto a large drum which has a radius that is larger than the bending radius of the pipe strings. When one pipe string has been reeled, it is joined to the next pipe string in the same way as the pipes were joined together, and the reeling goes on until the desired length has been reeled or until the drum is full.

There are thus considerable drawbacks to the known method. A considerable number of welds must be made, requiring quality assurance, and large storage space is required for temporarily storing pipe strings. The lay time of the pipe-lay vessel when loading is considerable and such specialized vessels have high day rates. A further drawback is that reeling and unreeling the pipe strings subject the pipe strings to great mechanical strain. In some cases, the pipe string suffers damage that results in the reeling process or unreeling process being stopped for the damage to be repaired. In some cases, the damage is not discovered until a check, performed as pressure-testing, is done after the laying of the pipeline on the sea floor is completed.

Reelable steel pipes are made with a diameter of up to 406 mm / 16 inches. Pipes of larger diameters are too rigid and have too large volumes for the reeling thereof to be appropriate or possible. Offshore laying of pipes with larger diameters than 16 inches is therefore done by pipe lengths being prepared for welding, the pipe lengths being welded together, the welds being quality-checked by means of X-ray photography / radioscopy, the weld area being corrosion-protected and insulated before the pipe is lowered into the sea. This takes place on board a specialized ship that is equipped like a factory for this purpose. In most cases, such ships are more than 150 metres in length and have crews of 150-250 employees for round-the-clock pipe assembling.

By extrusion is meant, in what follows, that a polymer mass is squeezed or pushed out of a die in a continuous process. The extruded object has the same cross-sectional shape as the shape of the gap of the die. By co-extrusion is meant, in what follows, the extrusion of two or more layers on top of each other at the same time in one die head. The die head is provided with two or more die gaps. The die gaps may be circular and concentric.

Pipes that are used for transporting oil, hydrocarbon gas or CO₂ have restrictions on diameter and restrictions on length when being manufactured, whether the pipes are to be used offshore or onshore.

By extrusion by pulling, also called pultrusion, is meant, in what follows, that reinforced fibres are pulled through a bath containing a resin, the fibres with the resin applied thereto then being pulled through a shaping tool and heated so that the resin polymerizes.

In the art, it is known to make tubular bodies by means of extrusion. A polymer material is forced out through a die. The die may be annular or there may be a mandrel, also termed an extruder core, positioned centrally in a circular die opening, for example. Further, it is known that extruded pipes formed of a polymer material may be fluid-tight, but not resistant to high internal or external pressures, especially in a radial direction. It is further known within the art that a pipe formed of a polymer material may be surrounded by a fibre layer. The fibre layer may be composed of a composite material comprising long fibres surrounded by a resin. It is also known within the art that pipes may be produced from just one composite material which has been hardened after shaping. It is known that pipes formed of a hardened composite material are resistant to pressure, but that leakages may occur because of microcracks in the resin that is used. The risk may be reduced by overdimensioning the wall thickness, but high pressures and/or pressure variations for some considerable time will increase the risk of microcracks and thereby leakages resulting in the pipe having to be replaced. Multilayer pipelines that are composed of an extruded polymer ply and a fibre ply are both fluid-tight and resistant to pressure directed radially.

The patent publication WO9100466 discloses a multilayer pipe. The pipe is formed of an inner ply in a thermoplastic polymer material, the inner ply preferably being extruded. An outer ply is formed of a thermoplastic or a thermo-setting polymer material, the outer ply preferably being pultruded. The outer surface of the inner ply is in contact with the inner surface of the outer ply.

The patent publication GB 1211860 discloses the manufacturing of a multilayer pipe by means of co-extrusion. The layered pipe is composed of an inner ply, an outer ply and an intermediate foamed ply. The inner ply, the outer ply and the foamed ply may be composed of the same thermoplastic material or they may be composed of two or more different thermoplastic materials. The foamed ply is made by adding a suitable blowing agent that liberates gas. The foamed ply constitutes an insulating ply between the inner and outer plies. Reinforcing filler elements may be added, in particular to the outer ply, in the form of glass fibres or asbestos fibres, for example. The patent publication EP 1419871 discloses the manufacturing of a multilayer pipe by means of co-extrusion as well. A foamed, intermediate ply constitutes an insulating ply between the inner ply and the outer ply.

The patent publication JP 9011355 discloses the manufacturing of a multilayer pipe in which an inner ply is formed of an extruded, thermoplastic material. The inner ply is surrounded by a first fibre layer in the longitudinal direction of the pipe and a second fibre layer that is wrapped in a substantially circumferential direction on the first fibre layer. The inner ply is made by first making an extruded, massive rod-shaped core which is formed of a thermoplastic material, in order then to apply the inner ply around the rod-shaped core by means of a so-called crosshead die. The inner ply, the first fibre layer and the second fibre layer are fused by heating. The heating also makes the inner ply detach from the core, and the core is pulled out of the pipe formed.

The patent publication GB 1345822 discloses a multilayer pipe in which an inner ply is formed of an extruded, thermoplastic material. The inner ply is surrounded by a first fibre layer which is wrapped in a substantially circumferential direction on the inner ply, a second fibre layer which extends along the first fibre layer in the longitudinal direction of the pipe and a third fibre layer which is wrapped in a substantially circumferential direction on the second fibre layer, and preferably perpendicularly to the first fibre layer.

The patent publication US 4515737 discloses the production of a multilayer pipe in which an inner ply is formed of an extruded, thermoplastic material. The inner ply is surrounded by a middle ply which is composed of a first fibre layer in the longitudinal direction of the pipe and a second fibre layer which is wrapped in a substantially circumferential direction on the first fibre layer. An outer ply, which consists of an extruded, thermoplastic material, is applied to the middle ply by means of a crosshead die.

The patent publication WO 2011128545 discloses a transport pipe for transporting hydrocarbons in cold environments. The transport pipe includes an inner pipe which has an electrically insulating outer surface, a heating ply externally on the inner pipe, the heating ply including carbon fibres embedded in a polymer material, an insulating ply externally on the heating ply and an outer pipe which is capable of resisting an external pressure of more than 100 bars. The transport pipe also includes spacers between the inner pipe and the outer pipe. The outer pipe may be composed of carbon fibres embedded in a polymer material. The inner pipe may be formed of a polymer material, such as polyamide (PA) or polyvinylidene difluoride (PVDF), for example. The inner pipe may also be formed of a steel pipe, the outer side of the pipe being coated with PA or PVDF as an electrically insulating ply. An electric voltage is impressed on the carbon fibres in the heating ply and they will conduct current. The heating ply thereby supplies the transport pipe with heat. The insulating ply may be formed of foamed polyurethane (PU). In an alternative, the outer pipe may be formed of steel. The patent publication discloses the production of a pipe with a diameter of approximately 15 cm.

The patent publication WO 03098093 discloses a pipe-in-pipe with a suitable insulating medium in the annular space between the pipes, so that the pipe-in-pipe is suitable for reeling onto the drum of a pipe-lay vessel. The inner pipe and the outer pipe are rigid pipes. The insulating medium includes two types of materials, one of which is formed of a material with good insulating properties, but relatively poor mechanical strength, whereas the other material is formed of a material with poor insulating properties, but with greater mechanical strength. The patent publication US 2010/0260551 discloses an alternative pipe-in-pipe which can be reeled.

The document US2003056845 discloses a multilayer pipe with axially oriented channels in its wall.

The patent publication US 5755266 discloses a laminated pipe to be used in petroleum activity offshore for injecting chemicals into wells and for transporting hydraulic fluid for controlling valves. The inner pipe consists of an extruded thermoplastic pipe. After degreasing, rubbing and washing, the pipe is coated, layer upon layer, with fibres and fibre mats impregnated with a thermosetting plastic. Finally, the pipe is cured in an oven, and after cooling, the pipe is reeled.

The patent documents US 2004/0194838, US 2010062202 and US 6516833 disclose flexible pipes with wire reinforcement in the wall of the pipe. Nearest to the centre, the pipe may additionally be provided with a reinforcing skeleton, termed a carcass in the art.

The invention has for its object to remedy or reduce at least one of the drawbacks of the prior art or at least provide a useful alternative to the prior art.

The object is achieved through features which are specified in the description below and in the claims that follow.

The invention relates to the manufacturing of an endless multilayer pipeline which is suitable for transporting oil and gas offshore and onshore. The invention also relates to an endless or continuous multilayer pipeline which has a smaller bending radius than pipe strings in metal. The invention also relates to an apparatus for manufacturing such an endless multilayer pipeline that is suitable for transporting oil and gas.

In a first aspect, the invention relates to a multilayer pipeline including at least:
- an inner fluid-tight ply formed of a first thermoplastic polymer material;
- an inner fibre-reinforced thermoplastic polymer ply including a wrapped fibre-reinforcement and surrounding the inner fluid-tight ply;
- a first intermediate ply formed of a second thermoplastic polymer material;
- an outer fibre-reinforced thermoplastic polymer ply including a wrapped fibre-reinforcement, wherein at least one of the inner fibre-reinforced thermoplastic polymer ply and the outer fibre-reinforced thermoplastic polymer ply includes at least one fibre-containing layer and one reinforcement-free layer.

The first intermediate ply may be formed of an expanded thermoplastic polymer material. The first intermediate ply is provided with at least one channel oriented axially. The multilayer pipeline may further include a second intermediate ply formed of a third thermoplastic polymer material. The second intermediate ply may be provided with at least one channel oriented axially. The cross section of the channel may be substantially circular. The cross section of the channel may be substantially oblong. The cross section of the channel may be substantially trapezoidal.

The second intermediate ply may be provided with at least one heating element oriented axially.

The wrapped fibre reinforcement includes at least one fibre tape.

The multilayer pipeline may include at least one optical-fibre cable extending in the longitudinal direction of the multilayer pipeline, and the at least one optical-fibre cable is positioned in at least one of the plies.

In a second aspect, the invention relates to a machine assembly for manufacturing an endless multilayer pipeline which includes an inner fluid-tight ply which consists of a first thermoplastic polymer material, the machine assembly comprising:
- a first wrapping-machine station; the first wrapping-machine station including at least: one reel carousel which is arranged to wrap fibre tape around the inner fluid-tight ply to form a fibre-reinforced layer in an inner fibre-reinforced polymer ply; and an extruder arranged to form a reinforcement-free layer of a thermoplastic polymer material surrounding the layer;
- an extruder arranged to form a first intermediate ply comprising a thermoplastic polymer material and surrounding the inner fibre-reinforced ply;
- a second wrapping-machine station; the second wrapping-machine station including at least: one reel carousel which is arranged to wrap fibre tape around the other plies of the multilayer pipeline to form a fibre-reinforced layer in an outer fibre-reinforced polymer ply; and
- an extruder arranged to form a reinforcement-free layer of a thermoplastic polymer material surrounding the layer.

The extruder that forms the first intermediate ply may be composed of an extruder provided with an extruder head, in which, in an annular space formed between the calibration element of the extruder head and the multilayer pipeline accommodated in the extruder head, at least one mandrel is positioned for the formation of an axially oriented channel in the first intermediate ply.

The machine assembly may further include an extruder arranged to form a second intermediate ply formed of a third thermoplastic polymer material, the positional order of the second intermediate ply optionally being: between the second, inner fibre ply and the first intermediate ply, or between the first intermediate ply and the outer fibre-reinforced polymer ply. The extruder may be provided with an extruder head, in which, in an annular space formed between the calibration element of the extruder head and the multilayer pipeline accommodated in the extruder head, at least one mandrel is positioned for the formation of an axially oriented channel in the second intermediate ply.

The machine assembly may further include an extruder arranged to form the inner fluid-tight ply which is formed of a first, thermoplastic polymer material.

The machine assembly may further include at least one reel arranged to accommodate an optical-fibre cable. The at least one reel may be arranged to feed an optical-fibre cable into the extruder that forms a fibre-free layer in the outer fibre-reinforced ply. The at least one reel may be arranged to feed an optical-fibre cable into the extruder that forms the inner fluid-tight ply.

In a third aspect, the invention relates to a method of forming an endless multilayer pipeline, the method including the steps of:
a) providing an inner fluid-tight ply which consists of a thermoplastic polymer;
b) forming an inner fibre-reinforced ply around the inner fluid-tight ply by wrapping a fibre tape around the inner fluid-tight ply to form the at least one fibre layer and, by means of extrusion, applying a reinforcement-free layer to the fibre layer;
c) forming, by means of extrusion, a first intermediate polymer ply around the inner fibre-reinforced ply; and
d) forming an outer fibre-reinforced ply by wrapping a fibre tape around the other plies to form at least one fibre layer and, by means of extrusion, applying a reinforcement-free layer to the fibre layer.

The method in step c) may further include providing the extruder head of an extruder, in an annular space formed between the calibration element of the extruder head and the multilayer pipeline accommodated in the extruder head, with at least one mandrel that forms an axially oriented channel in the first intermediate polymer ply.

The method may further include the step of:
c1) forming, by extrusion, a second intermediate ply formed of a third polymer material which is optionally positioned: either between the inner fibre ply formed in step b) and the first intermediate polymer ply formed in step c), or between the first intermediate polymer ply formed in step c) and the outer fibre-reinforced ply formed in step d). The method in step c1) may further include providing the extruder head of an extruder, in an annular space formed between the calibration element of the extruder head and the multilayer pipeline accommodated in the extruder head, with at least one mandrel that forms an axially oriented channel in the second intermediate polymer ply.

The method in step a) may include forming, by extrusion, the inner fluid-tight ply formed of a thermoplastic polymer.

The method may include using a machine assembly as described above, and the method may further include positioning the machine assembly on a deck aboard a ship.

In what follows, examples of preferred embodiments are described, which are visualized in accompanying drawings, in which:

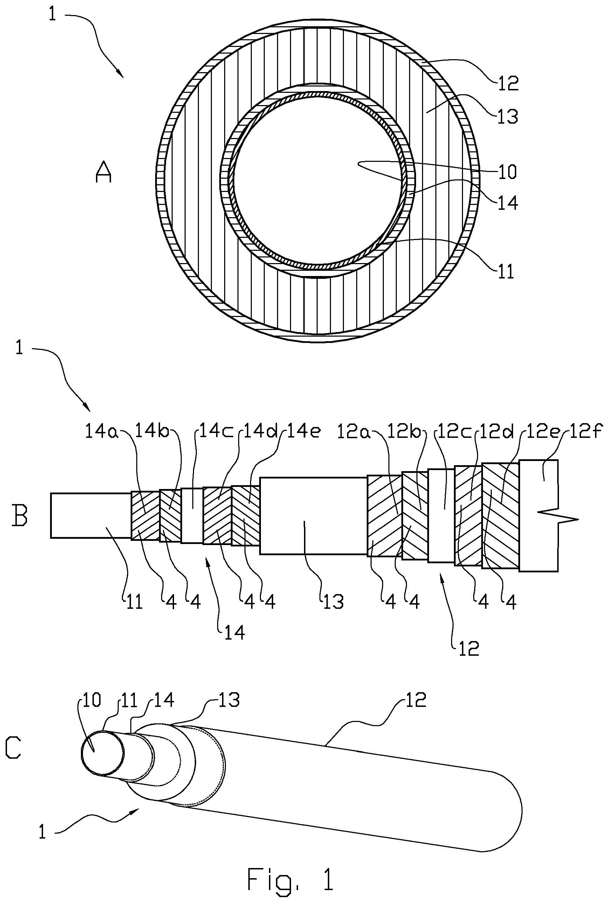

- Figures 1A-C: show, respectively, in A, a schematic cross section on a first scale; in B, a schematic side view on a smaller scale and, in C, an isometric perspective view on a still smaller scale of a multilayer pipeline in a first embodiment, in which the pipeline includes, from the inside out, an inner, homogenous wear ply in a first, extruded thermoplastic polymer material, an inner, composite, fibre-reinforced thermoplastic polymer ply, a first intermediate, homogenous ply in a second, extruded thermoplastic polymer material and an outer, composite, fibre-reinforced thermoplastic polymer ply, and in which, in B and C, some of the plies have been removed to make underlying plies visible;

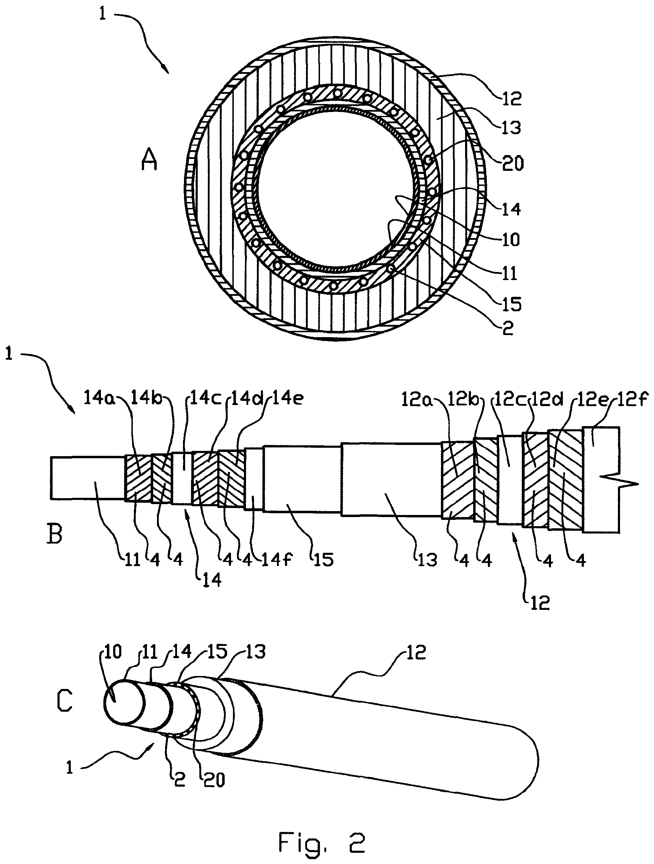

- Figures 2A-C: show, respectively, in A, a schematic cross section on a first scale; in B, a schematic side view on a smaller scale and, in C, an isometric perspective view on a still smaller scale of a multilayer pipeline in a second embodiment, in which, in addition to what is shown in figure 1, the pipeline is provided with a second intermediate, homogenous ply which consists of an extruded thermoplastic polymer material, the second intermediate ply lying between the inner fibre-reinforced thermoplastic polymer ply and the first intermediate thermoplastic ply, and the second intermediate ply being provided with a plurality of axial channels;
- Figures 3A-B: show schematic cross sections of a multilayer pipeline in a third embodiment, in which the pipeline is provided with the same plies as those shown in figure 2A, but in which the second intermediate ply is provided with axially oriented electrical heater cables (3A) or a combination of channels and heater cables (3B);
- Figure 4: shows an isometric perspective view of a multilayer pipeline in a fourth embodiment and an enlarged section, in which the pipeline is provided with the same plies as those shown in figure 2, and in which the second intermediate ply is provided with a plurality of axial channels of another shape, and in which the layered structure of the outer fibre-reinforced polymer ply and the inner fibre-reinforced polymer ply is visualized;
- Figure 5: shows an isometric perspective view of a multilayer pipeline in a fifth embodiment and an enlarged section, in which the pipeline is provided with the plies as shown in figure 1, and the first intermediate ply is provided with a plurality of axial channels which may be carrying fluid;
- Figure 6: shows an isometric perspective view of a portion of a first embodiment of a machine assembly which is arranged to produce a multilayer pipeline in accordance with the invention, the apparatus being provided with a plurality of extruders and reel carousels;
- Figure 7: shows a partial section, on a different scale, of the machine assembly that is shown in figure 6;
- Figure 8: shows a side view, on a smaller scale, of the entire machine assembly that is shown in part in figures 6 and 7;
- Figures 9A-B: show side views, on a smaller scale, of the entire machine assembly in two alternative embodiments;
- Figure 10: shows a partial section, on a larger scale, of details of the machine assembly at a first extruder and a reel carousel;
- Figure 11: shows a partial section, on a different scale, of details of the middle portion of the machine assembly shown in figures 6 and 7;
- Figure 12: shows a partial section, on a larger scale, of details of an extruder arranged to form axial channels in an extruded ply;
- Figure 13: shows, on a different scale, an alternative embodiment of the multilayer pipeline;
- Figure 14: shows schematically, on a different scale, a fibre tape which is used to form a fibre-reinforced polymer ply;
- Figures 15A-B: show machine assemblies as shown in figures 8 and 9A, but in other embodiments, in which optical-fibre cables are being embedded in two plies of the multilayer pipeline;
- Figure 16: shows the same as figure 1A, but in another embodiment, in which optical-fibre cables have been embedded in two plies of the multilayer pipeline; and
- Figures 17A-B: show the same as figures 1B and 2B, but in other embodiments in which three optical-fibre cables have been embedded in each of two plies of the multilayer pipeline.

The drawings shown are schematic and show features that are important for the understanding of the invention. The relative proportions may differ from the proportions shown.

In the drawings, the reference numeral 1 indicates a multilayer pipeline, also called a composite pipeline 1, in accordance with the invention. In a first embodiment, as shown in figures 1A-C, the multilayer pipeline 1 is composed of an inner, fluid-tight wear ply 11, also called liner; of an inner fibre-reinforced polymer ply 14 surrounding the inner wear ply 11; of a first intermediate ply 13; and an outer fibre-reinforced polymer ply 12. The inner wear ply 11 and the first intermediate ply 13 may be formed of an extruded thermoplastic polymer material which may be the same material in both plies, such as thermoplastic polyurethane, or different polymer materials. The first intermediate ply 13 may consist of a foamed or expanded, thermoplastic polymer material and will then constitute an insulating ply 13. The insulating ply 13 may include so-called heavy-duty insulation. Expanded or foamed polypropylene, polyethylene and thermoplastic polyurethane constitute examples of heavy-duty insulation. As an alternative, the insulating ply 13 may be formed from so-called light-duty insulation. Expanded or foamed polystyrene constitutes an example of light-duty insulation.

In a second embodiment, as shown in figures 2A-C, the multilayer pipeline 1 is composed of an inner wear ply 11, of an outer fibre-reinforced thermoplastic polymer ply 12, a first intermediate ply 13, an inner fibre-reinforced thermoplastic polymer ply 14 surrounding the inner wear ply 11, and a second intermediate, thermoplastic polymer ply 15. The second intermediate, thermoplastic polymer ply 15 is provided with at least one element 2 extending axially in the second intermediate polymer ply 15. The second intermediate, thermoplastic polymer ply 15 surrounds the inner fibre-reinforced, thermoplastic polymer ply 14, and the first intermediate ply 13 is positioned between the outer fibre-reinforced polymer ply 12 and the second intermediate polymer ply 15. In this embodiment, the element 2 includes closed channels 20. The closed channels 20 may accommodate a flowing, heat-emitting fluid.

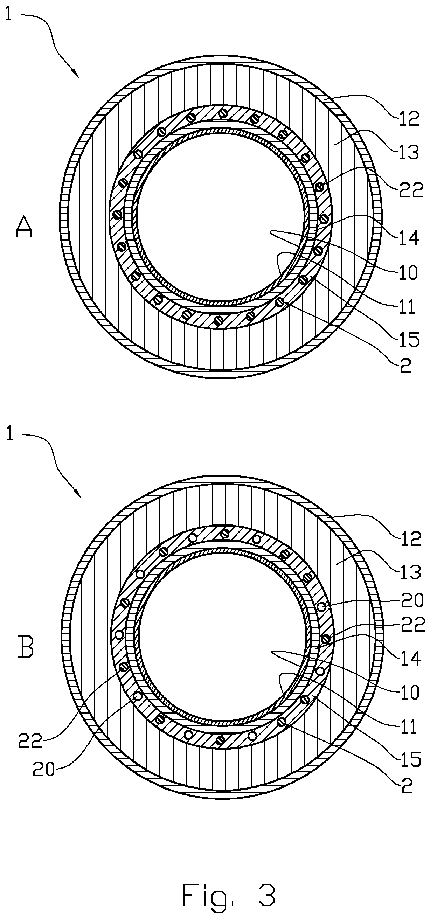

A third embodiment of the multilayer pipeline 1 is shown in figure 3A. In this embodiment, the multilayer pipeline 1 is provided with the same plies as the pipeline 1 shown in figure 2, but the element 2 includes electric heating conductors 22. A variant of this embodiment includes a combination of closed channels 20 and heating conductors 22 as shown in figure 3B.

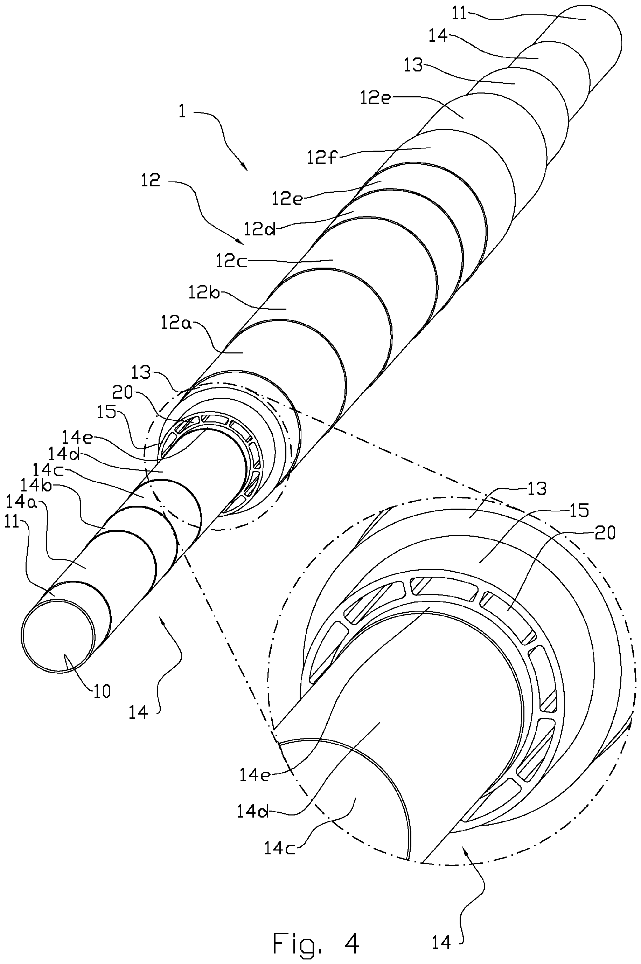

A fourth embodiment is shown in figure 4. In this embodiment, the closed channels 20 are formed with an elongated cross section.

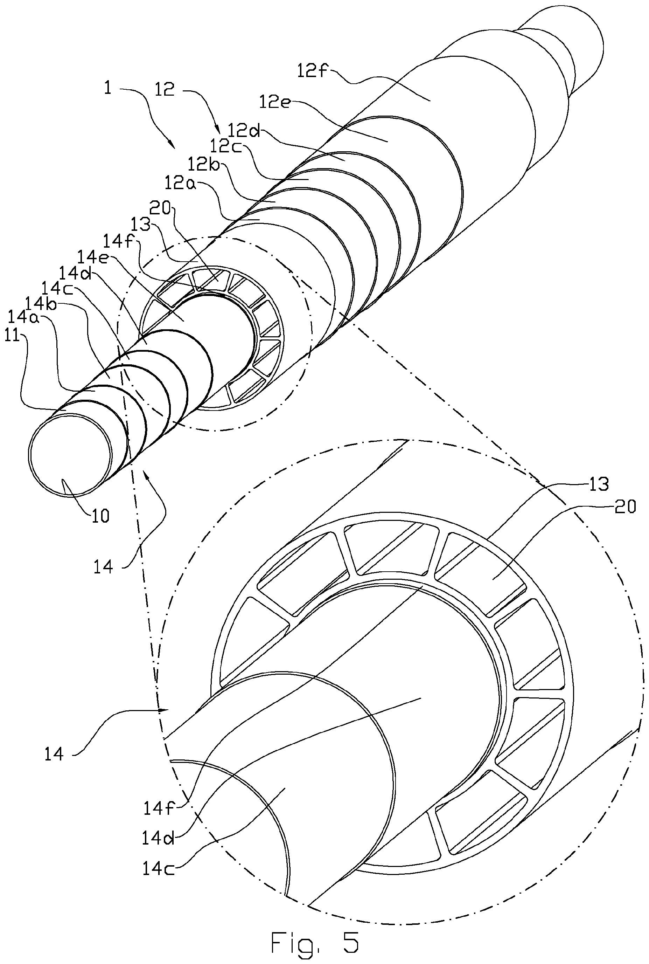

A fifth embodiment is shown in figure 5. In this embodiment, the multilayer pipeline 1 includes the same plies as those shown in figure 1, but the first intermediate ply 13 is provided with at least one closed channel 20. The closed channels 20 are shown as being formed with a substantially trapezoidal cross section.

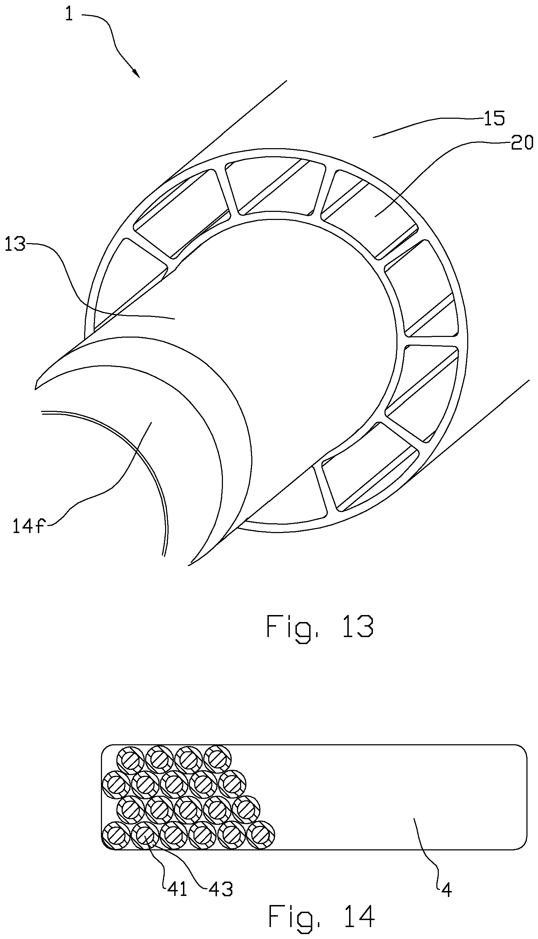

A sixth embodiment is shown in figure 13. In this embodiment, the second intermediate ply 15 surrounds the first intermediate ply 13. Channels 20 have been formed in the second intermediate ply 15. The ply 13 includes an insulating polymeric material.

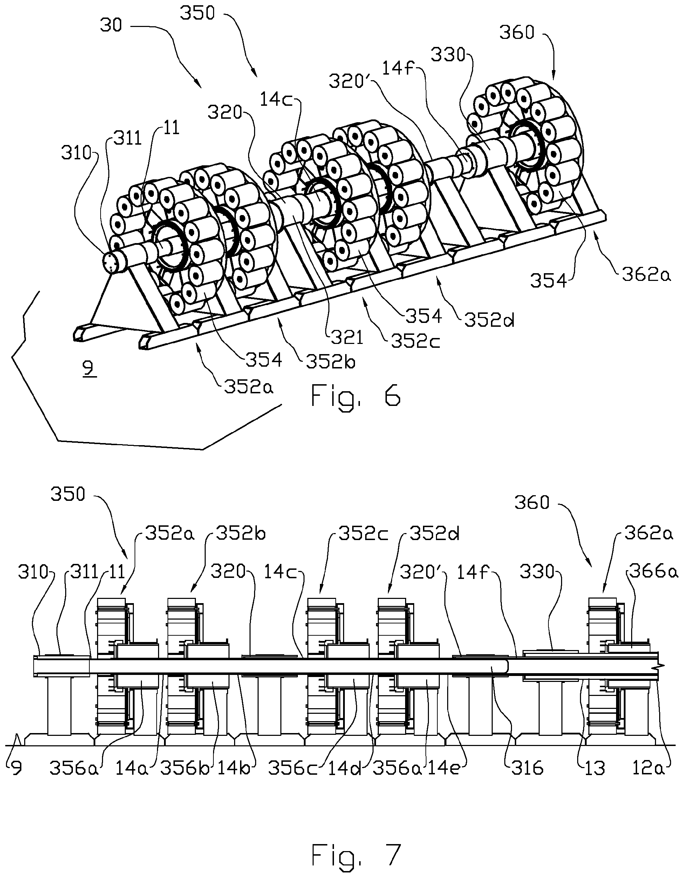

The multilayer pipeline 1 in accordance with the invention may be produced by a combination of extrusion and fibre-wrapping. This gives a compact machine assembly 30 as shown in figures 6-12, 15.

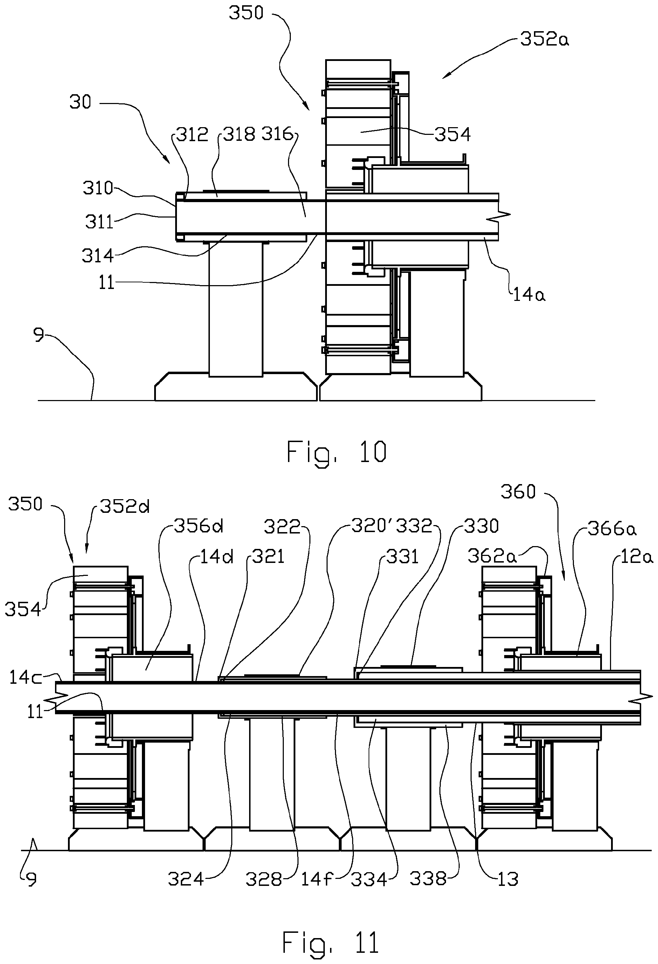

In figures 6-8, a first embodiment of a machine assembly 30 is shown, which is arranged to produce a multilayer pipeline 1 with an inner wear ply 11, an inner fibre-reinforced polymer ply 14 surrounding the inner wear ply 11, a first intermediate ply 13 and an outer fibre-reinforced polymer ply 12. Only constructional features that are necessary for the understanding of the invention are indicated and described. The machine assembly 30 includes a first extruder 310 which is indicated schematically in the figures. An extruder head 311 includes an annular die gap 312, see figure 10, which is fed a first, molten, thermoplastic polymer mass from an extruder barrel of a kind known *per se* (not shown). The first polymer mass flows out of the die gap 312 into an annular space 314 formed between an inner mandrel 316 and an outer calibration element 318. The inner mandrel 316 and/or the outer calibration element 318 may be provided with internal cooling channels (not shown) which are arranged to accommodate a circulating cooling medium. The cooling medium will make the inner mandrel 316 and/or the calibration element 318, by the outer surface and inner surface thereof, respectively, which is/are in contact with the first polymer mass, cool the polymer mass so that it is dimensionally stable when it is forced out of the extruder head 311. The first polymer mass forms the tubular wear ply 11.

The tubular inner wear ply 11 is passed through the centre of one first wrapping-machine station 350. The wrapping-machine station 350 may include one or a plurality of reel carousels 352a-d and one or more crosshead extruders 320, 320'. The reel carousels 352a-b are provided with a plurality of reels 354. Such reel carousels 352a-b and reels 354 are known in the art and are not discussed any further. The reels 354 are provided with a fibre tape 4, see figure 14. The fibre tape 4 includes a plurality of fibre threads 41 side by side. The threads 41 may be formed of fibreglass. The threads 41 are impregnated with a thermoplastic polymer 43, such as thermoplastic polyurethane as shown schematically in figure 14. The fibre tape 4 may be 30 mm wide and 5 mm thick, but other dimensions are possible as well, and the dimensions of the fibre tape 4 are matched to the dimensions of the multilayer pipeline 1. For example, a fibre tape 4 which is 20 mm wide and 3 mm thick may be suitable for manufacturing a multilayer pipeline 1 with a diameter of 15.2 cm / 6 inches, and a 50 mm wide and 6 mm thick fibre tape 4 may be suitable for manufacturing a multilayer pipeline 1 with a diameter of 127 cm / 50 inches. The reel carousel 352a will wrap a plurality of fibre tapes 4 around the wear ply 11 at an angle to the longitudinal direction of the wear ply 11 so that a fibre-reinforced polymer layer 14a is formed. The fibre tapes 4 are wrapped edge against edge. The reel carousel 352a is provided with a heater unit 356a downstream of the reel carousel 352a. The heater unit 356a may be provided with a heat source such as an IR heat source (not shown) which melts the thermoplastics of the fibre tapes 4, making them coalesce in the layer 14a. Each reel carousel 352a-b, for example the reel carousel 352a, will wrap the fibre tape 4 at an angle differing from the angles of the fibre tapes 4 from the other reel carousels 352b, as it is known within the art. One or more of the reel carousels 352a-b may also be stationary, which means that the fibre tape 4 will be laid on the wear ply 11 in the longitudinal direction of the wear ply 11. The reel carousel 352b is provided with a heater unit 356b in a manner corresponding to that of the reel carousel 352a.

After the wear ply 11 has had a fibre-reinforced polymer layer 14a, 14b applied to it from the reel carousels 352a-b, it is fed into an extruder head 321 of a second extruder 320. The extruder head 321 includes a die gap 322 which is fed a molten thermoplastic polymer mass, of the same kind as that with which the fibre tape 4 is impregnated, from an extruder barrel of a kind known *per se* (not shown), as shown in figure 11. The extruder head 321 of the so-called crosshead type (crosshead die; right-angle head). The die gap 322 surrounds the fibre layer 14b radially. The polymer mass exits the die gap 322 and settles in an enclosing manner externally on the fibre layer 14b in an annular space 324 formed between the fibre layer 14b and an outer calibration element 328. The outer calibration element 328 may be provided with internal cooling channels (not shown) which are arranged to accommodate a circulating cooling medium. The cooling medium will have the effect of the calibration element 318, by its inner surface which is in contact with the polymer mass, cooling the polymer mass so that this will be dimensionally stable when it is carried out of the extruder head 321. The polymer mass forms a reinforcement-free layer 14c in the fibre-reinforced ply 14. Application of the reinforcement-free layer 14c has the advantage, in the first place, of melting the polymer with which the fibres of the layers 14a, 14b are impregnated, making these fibres and these layers 14a, 14b fuse, and, secondly, of air in the layers 14a, 14b being expelled.

After application of the layer 14c, the pipeline is fed forward in through the centre to a plurality of reel carousels 352c-d. The reel carousels 352c-d work in the same way as the reel carousel 352a and respectively form the layers 14d and 14e from fibre tape 4 in the same way as described for the layers 14a and 14b. After the application of the layers 14d and 14e, a fibre-free layer 14f is applied in the same way as the layer 14c in a third crosshead extruder 320' in the same way as shown in figure 11. The advantage of applying the layer 14f is the same as for the layer 14c.

The inner mandrel 316 may extend within the pipeline 1 from the first extruder 310, through the reel carousels 352a-b, the second extruder 320, the reel carousels 352c-d and the third extruder 320', as shown in figure 7.

The unfinished multilayer pipeline 1 is fed forward into an extruder head 331 of a fourth extruder 330 as shown in figure 11. The extruder head 331 includes a die gap 332 which is supplied with a molten thermoplastic polymer mass of a second kind from an extruder barrel of a kind known *per se* (not shown) to an annular space 334 between an outer calibration element 338 and the ply 14 as shown in figure 11. The extruder head 331 is of the crosshead type. The second polymer mass may be a foamed or expanded thermoplastic polymer mass, or a foaming agent may have been added to the second polymer mass, making the second polymer mass form a foam in the annular space 334, as it is known within the art. The outer calibration element 338 may be provided with internal cooling channels (not shown) which are arranged to accommodate a circulating cooling medium. The cooling medium will have the effect of making the calibration element 338, by its inner surface which is in contact with the second polymer mass, cool the second polymer mass so that it is dimensionally stable when it is carried out of the extruder head 331. The second polymer mass forms the tubular first intermediate ply 13.

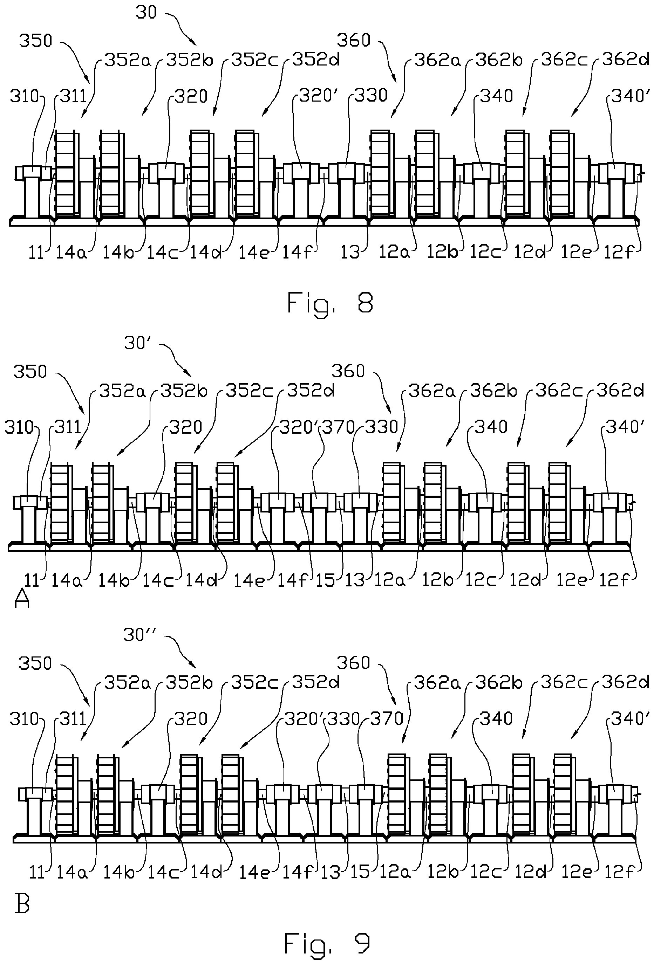

The unfinished multilayer pipeline 1 is fed forward through a second wrapping-machine station 360. The wrapping-machine station 360 is substantially similar to the wrapping-machine station 350, and has the same constructional features and operation. The wrapping-machine station 350 may include one or a plurality of reel carousels 362a-d and one or more crosshead extruders 340, 340'. The reel carousels 362a-b are provided with a plurality of reels 364. Like the reels 354, the reels 364 are provided with a fibre tape 4. After the first intermediate ply 13 has had a layer 12a of fibre tape 4 applied to it from the reel carousel 362a, it is passed through a heater unit 366a downstream of the reel carousel 362a. Then a layer 12b is applied from the reel carousel 362b, a fibre-free layer 12c from the fifth extruder 340, the layers 12d and 12e from the reel carousels 362c and 362d, respectively, and finally a fibre-free layer 12f from the sixth extruder 340' as shown in figure 8. The advantage of applying the reinforcement-free layers 12c and 12f is the same as previously described for the layers 14c and 14f.

The machine assembly 30 is shown as being arranged on a base 9. The base 9 may consist of a deck 9 on a ship (not shown).

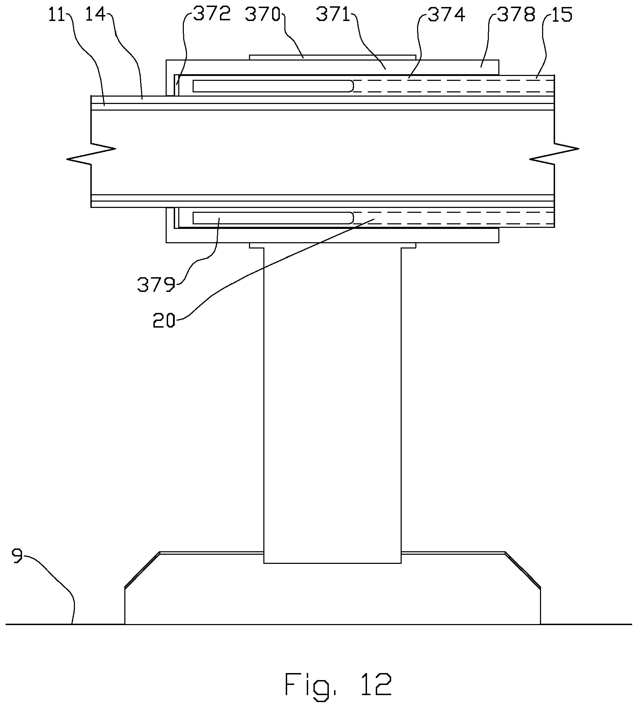

In figures 9A-B a second embodiment of a machine assembly 30' is shown, which is arranged to produce a multilayer pipeline 1 with an inner fluid-tight wear ply 11; an inner fibre-reinforced polymer ply 14; a second intermediate ply 15; a first intermediate ply 13; and an outer fibre-reinforced polymer ply 12. Only constructional features that are necessary for the understanding of the invention are indicated and described. Elements of the machine assembly 30' that are found in the machine assembly 30 and that have the same function have been given the same reference numerals and are mentioned only for the understanding of the second machine assembly 30'. The machine assembly 30' includes a first extruder 310 provided with a first extruder head 311, a first wrapping-machine station 370 with two extruders 320, 320', a fourth extruder 330 and a second wrapping-machine station 360 with two extruders 340, 340'. The machine assembly 30' further includes a seventh extruder 370 provided with an extruder head 371 as shown in figure 12. The inner fibre-reinforced polymer ply 14 is carried into the extruder head 371. The extruder head 371 includes a die gap 372 which is fed a third molten, thermoplastic polymer mass from an extruder barrel of a kind known *per se* (not shown). The extruder head 371 is of the so-called crosshead type. The die gap 372 surrounds the inner, fibre-reinforced polymer ply 14 radially. The third polymer mass flows out of the die gap 372 and settles in an enclosing manner externally on the inner, fibre-reinforced polymer ply 14 in an annular space 374 formed between the ply 14 and an outer calibration element 378. The outer calibration element 378 may be provided with internal cooling channels (not shown) arranged to accommodate a circulating cooling medium. The cooling medium will have the effect of making the calibration element 378, by its inner surface which is in contact with the third polymer mass, cool the third polymer mass so that this is dimensionally stable when it is fed out of the extruder head 371. The third polymer mass forms the tubular jacket 15.

In the annular space 374, the extruder head 371 may be provided with a plurality of round mandrels (drift pins) 379 with first and second end portions and a longitudinal axis that is oriented parallel to the longitudinal axis of the annular space 374. The mandrels 379 may be provided with internal cooling channels (not shown). The mandrels 379 are positioned with their first end portions near the die gap 372 so that the third polymer mass will pass the mandrels in a molten state, and so that the cooling effect of the calibration element 378 and the mandrels 379 results in the third polymer mass being dimensionally stable at the second end portions of the mandrels 379. Thereby closed channels 20 are formed in the second intermediate ply 15 as shown in figure 2.

In an alternative embodiment, electric heating conductors 22 are inserted into the annular space 374 from the upstream end portion of the extruder head 371 so that the heating conductors 22 are oriented axially in the second intermediate ply 15. The heating conductors 22 will be surrounded by the third polymer mass as shown in figure 3.

In a further alternative embodiment, the cross sections of the mandrels are oblong in the circumferential direction of the annular space 374, and channels 20 are formed in the second intermediate ply 15 with oblong cross sections as shown in figure 4.

In a further alternative embodiment, the dimensions of the annular space 374 are increased so that there will be a sufficient distance between the outer surface of the inner fibre-reinforced polymer ply 14 and the inner surface of the calibration element 378 to enable the positioning of mandrels 379 having trapezium-like cross sections. Channels 20 having trapezium-like cross sections will then be formed in the second intermediate ply 15 (not shown). As an alternative to this embodiment, it may be appropriate to form the channels 20 in the first intermediate ply 13 and without the second intermediate ply 15, as shown in figure 5. This can be done by altering the machine arrangement 30 as shown in figure 8, by replacing the extruder 330 with the extruder 370 and supplying the extruder 370 with a third, thermoplastic polymer instead of a foamed second polymer. The machine arrangement 30' as shown in figure 9A can also be used, either by removing the second extruder head 330 or by the extruder head 330 not being used.

A further alternative machine arrangement 30" is shown in figure 9B. In this machine arrangement 30", the order of the extruders 330 and 370 is switched. This has the effect of the second intermediate ply 15 surrounding the first intermediate ply 13 as shown in figure 13.

The wear ply 11 may be produced independently of the other plies. It is therefore within the scope of the invention for the wear ply 11 to be produced as a pipe in a manner known *per se,* and for the wear ply 11 to be provided as a reeled pipe, for example. The wear ply 11 may be carried into the first wrapping-machine station 350 as described above.

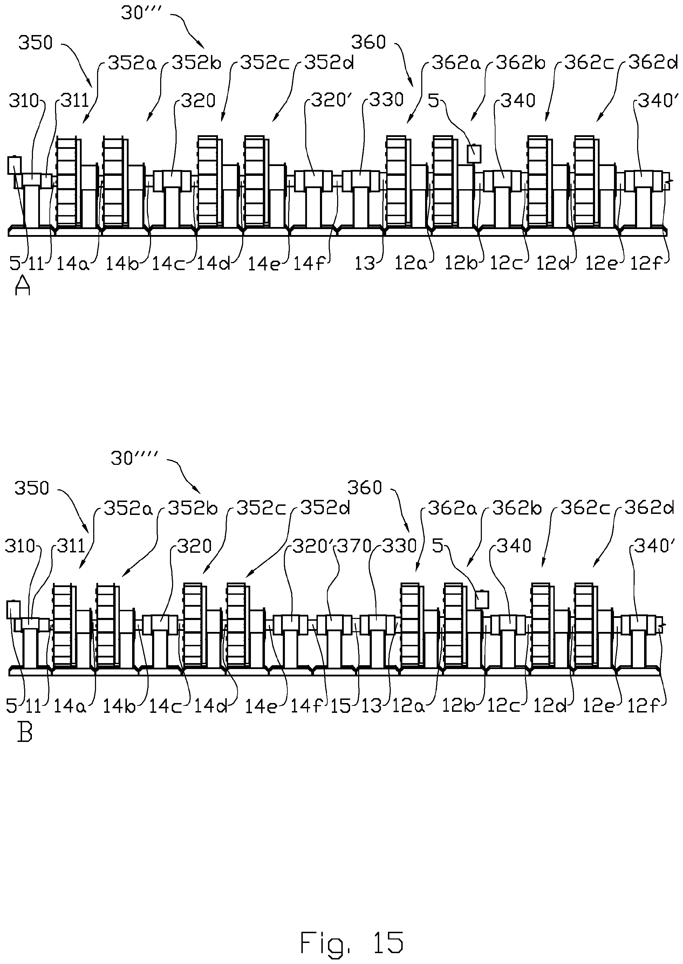

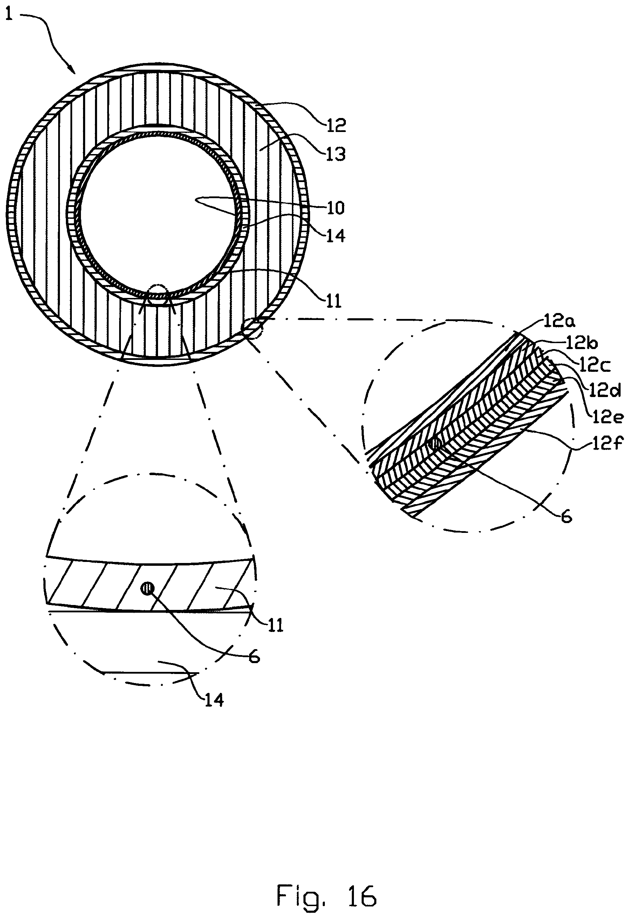

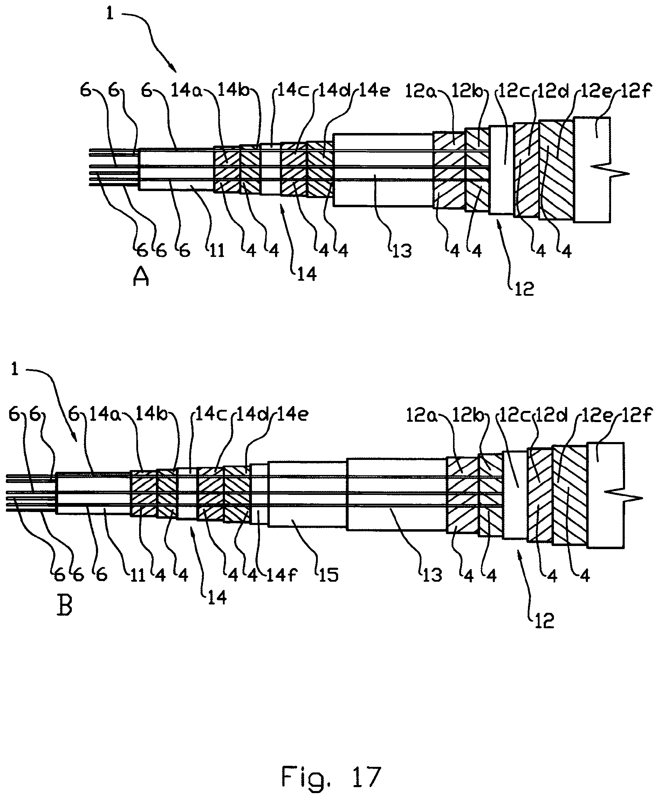

Figures 16 and 17 show the multilayer pipeline 1 in alternative embodiments. Figure 15 shows alternative machine arrangements for forming the multilayer pipeline 1 in these embodiments. An optical-fibre cable 6 of a type known *per se* is embedded in at least one ply 11, 12, 13, 14, 15 of the multilayer pipeline 1. It is known within the art that such an optical-fibre cable 6 together with a suitable laser light source (not shown) and a suitable receiver (not shown) can be used to determine whether the optical-fibre cable 6 is broken and the distance to the break. It is further known within the art that such an optical-fibre cable 6 together with a suitable laser light source and a suitable receiver can be used to determine the temperature along the optical-fibre cable 6. It is further known in the art that such an optical-fibre cable 6 together with a suitable laser light source and a suitable receiver can be used to determine the pressure conditions along the optical-fibre cable 6. Other measurements are also conceivable. In figure 16, one optical-fibre cable 6 in the wear ply 11 and one optical-fibre cable in the layer 12c of the outer fibre-reinforced polymer ply 12 are shown. In figure 17, three optical-fibre cables 6 in the wear ply 11 and three optical-fibre cables 6 in the layer 12c of the outer fibre-reinforced polymer ply 12 are shown. In other embodiments there may be one or more optical cables 6 in the wear ply 11 alone. In still other embodiments, there may be one or more optical cables 6 in the outer fibre-reinforced ply 12 alone. One or more optical-fibre cables may also be embedded in at least one of the first intermediate ply 13, the second intermediate ply 15 and one or both of the layers 14c and 14f of the inner fibre-reinforced polymer ply 14. The multilayer pipeline 1 may be provided with optical cables 6 in combinations of the embodiments that are mentioned above.

One machine arrangement 30'" is shown in figure 15A for manufacturing the multilayer pipeline 1 shown in figures 16 and 17A. The machine arrangement 30''' is provided with reels 5 accommodating the optical-fibre cable 6. The reels 5 are arranged to feed the optical-fibre cable 6 into the extruder 310 forming the inner wear ply 11, and to feed the optical-fibre cable 6 into the extruder 340 forming the layer 12c of the outer fibre-reinforced ply 12. One alternative machine arrangement 30"" is shown in figure 15B for manufacturing the multilayer pipeline 1 shown in figure 17B. The machine arrangement 30"" is provided with reels 5 accommodating the optical-fibre cable 6. The reels 5 are arranged to feed the optical-fibre cable 6 into the extruder 310 forming the inner wear ply 11, and to feed the optical-fibre cable 6 into the extruder 340 forming the layer 12c of the outer fibre-reinforced ply 12.

A multilayer pipeline 1 as described with a diameter of 406 mm (16 inches) and upwards has considerable buoyancy in water, but the pipeline 1 itself has a specific weight of approximately 1.2 kg/dm³. Such a pipeline is laid by it being filled with water during laying. The multilayer pipeline 1 is emptied of water in a known manner when the laying is finished. It may be advantageous for the channels 20 to be filled with a heavy mass after the multilayer pipeline 1 has been produced and while the multilayer pipeline 1 is being laid. This may advantageously be achieved by drilling openings (not shown) from the outside through the ply 12, possibly through the ply 13, into the channels 20 of the ply 15. The openings are formed with even spacing in the longitudinal direction of the multilayer pipeline 1. Fluid concrete is filled into the channels 20, and the concrete hardens inside the channels 20.

A machine arrangement 30 as shown is suitable for positioning on a deck 9 aboard a ship (not shown). For example, the machine arrangement 30 may be arranged to produce a multilayer pipeline 1 at a rate of 2 m/min. In round-the-clock operation, without disruption of production, such a machine arrangement may produce 2880 m of multilayer pipeline 1 per day. Thus, the machine arrangement 30 is well suited for producing transport pipelines for laying offshore. Thus, the invention solves many of the problems connected with laying such transport pipes. In addition the multilayer pipeline 1 may be provided with a continuous optical-fibre cable 6 for monitoring the transport pipe. Such use of the optical-fibre cable 6 is not possible with the prior art, in which pipe lengths of steel are welded together. The invention is not limited to use aboard ships. The machine assembly 30 is compact and also suitable for use on land where the machine assembly 30 may be positioned on a movable platform (not shown).

### Example 1

A multilayer pipeline 1 as shown in figures 1A-C is made with an external diameter of 40.6 cm (16 inches). The wear ply 11 is formed of thermoplastic polyurethane and forms a ply 8 mm thick. The first intermediate ply 13 is formed of foamed, thermoplastic polyurethane and constitutes an insulating ply 50 mm thick. The outer fibre-reinforced polymer ply 12 is formed of fibreglass which has been impregnated with thermoplastic polyurethane and an outer layer 12f which is formed of thermoplastic polyurethane, and forms a ply 15 mm thick. The inner fibre-reinforced polymer ply 14 is formed of fibreglass which has been impregnated with thermoplastic polyurethane and forms a ply 15 mm thick.

### Example 2

A multilayer pipeline 1 as shown in figures 2A-C is made with an external diameter of 40.6 cm (16 inches). The wear ply 11 is formed of thermoplastic polyurethane and forms a ply 8 mm thick. The first intermediate ply 13 is formed of foamed polystyrene and constitutes an insulating ply 50 mm thick. The outer fibre-reinforced polymer ply 12 is formed of fibreglass which has been impregnated with thermoplastic polyurethane and an outer layer 12f which is formed of thermoplastic polyurethane, and forms a ply 15 mm thick. The inner fibre-reinforced polymer ply 14 is formed of fibreglass which has been impregnated with thermoplastic polyurethane and forms a ply 15 mm thick. A second intermediate ply 15 is formed of thermoplastic polyurethane. In the second intermediate ply 15, twenty closed channels 20 extending axially have been formed. The channels 20 are positioned side by side and evenly spaced apart in the circumference of the second intermediate ply 15. A heat-emitting fluid may flow through the channels 20. In this example, the second intermediate ply 15 forms a heating jacket inside the multilayer pipeline 1. The heat-emitting fluid may flow in a first direction in some of the channels 20 and in a second direction which is opposite of the first direction, in some of the channels 20.

### Example 3

A multilayer pipeline 1 as shown in figure 3A is made with an external diameter of 40.6 cm (16 inches). The multilayer pipeline 1 is substantially made up in the same way as the multilayer pipeline 1 described in example 2. As an alternative to the closed channels 20, the second intermediate ply 15 is provided with electric resistance wires 22 of a kind known *per se,* also called heater cables 22. In this example, the second intermediate ply 15 forms a heating jacket inside the multilayer pipeline 1. The heater cables 22 may include an outer insulating layer. In an alternative embodiment, the second intermediate ply may be provided with both heater cables 22 and channels 20 as shown in figure 3B.

### Example 4

A multilayer pipeline 1 as shown in figure 4 is made with an external diameter of 40.6 cm (16 inches). The wear ply 11 is formed of thermoplastic polyurethane and forms a ply 8 mm thick. The first intermediate ply 13 is formed of foamed, thermoplastic polyurethane and constitutes an insulating ply 32 mm thick. The outer fibre-reinforced polymer ply 12 is formed of fibreglass which has been impregnated with thermoplastic polyurethane and an outer layer 12f which is formed of thermoplastic polyurethane, and forms a ply 15 mm thick. In figure 5 it is illustrated that the outer fibre-reinforced polymer ply 12 has been formed by the application of plies 12a-d from the wrapping-machine station 360', 360". The inner fibre-reinforced polymer ply 14 is formed of a fibreglass which has been impregnated with epoxy and forms a ply 15 mm thick. In figure 4 it is illustrated that the fibre-reinforced polymer ply 14 has been formed by the application of plies 14a-b and 14c-d from the wrapping-machine station 350. A second intermediate ply 15 is formed of thermoplastic polyurethane. In the second intermediate ply 15, ten closed channels 20 extending axially have been formed for the transport of a heat-emitting fluid. Each channel 20 has a cross-sectional area of 20 cm². The channels 20 are positioned side by side and evenly spaced apart in the circumference of the second intermediate ply 15.

### Example 5

A multilayer pipeline 1 in an alternative embodiment is shown in figure 5. The multilayer pipeline 1 is arranged to transport a first fluid in the channel 10 of the pipeline 1 and a second fluid in the peripheral channels 20 of the pipeline 1. The first fluid may be oil and the second fluid may be gas. The multilayer pipeline 1 may be made with an external diameter of 40.6 cm (16 inches) or larger. The wear ply 11 is formed of polyurethane and forms a ply 8 mm thick. The outer fibre-reinforced polymer ply 12 is formed of fibreglass which has been impregnated with thermoplastic polyurethane and an outer layer 12f which is formed of thermoplastic polyurethane, and forms a ply 15 mm thick. In figure 5 it is illustrated that the outer fibre-reinforced polymer ply 12 has been formed by the application of the layers 12a-d, 12c-d from the wrapping-machine station 360. The inner fibre-reinforced polymer ply 14 is formed of a fibreglass which has been impregnated with thermoplastic polyurethane and forms a ply 15 mm thick. In figure 5 it is illustrated that the inner fibre-reinforced polymer ply 14 has been formed by the application of layers 14a-b, 14c-d from the wrapping-machine station 350. A first intermediate ply 13 is formed of thermoplastic polyurethane. In the first intermediate ply 13, ten closed channels 20 extending axially have been formed for the transport of a fluid. Each channel 20 has a cross-sectional area of 20 cm². The channels 20 are positioned side by side and evenly spaced apart in the circumference of the first intermediate ply 13.

### Example 6

A multilayer pipeline 1 in an alternative embodiment is shown in figure 12. The multilayer pipeline 1 may be made with an external diameter of 40.6 cm (16 inches) or larger. The first intermediate ply 13 is formed of foamed polystyrene and constitutes an insulating ply. The second intermediate ply 15 surrounds the ply 13 and is formed of thermoplastic polyurethane. In the second intermediate ply 15, ten closed channels 20 extending axially have been formed. Each channel 20 has a cross-sectional area of 20 cm². The channels 20 are positioned side by side and evenly spaced apart in the circumference of the second intermediate ply 15. The outer fibre ply 12 (not shown in figure 13) surrounds the second intermediate ply 15. The channels 20 are arranged to be filled with fluid concrete (not shown), or some other heavy fluid mass, through openings (not shown) that are formed through the outer fibre ply 12.

## Claims

1. An endless multilayer pipeline (1) which includes at least:
- an inner fluid-tight ply (11) which is formed of a first thermoplastic polymer material;
- an inner fibre-reinforced thermoplastic polymer ply (14) which includes a wrapped fibre-reinforcement and which surrounds the inner fluid-tight ply;
- a first intermediate ply (13) which is formed of a second thermoplastic polymer material;
- an outer fibre-reinforced thermoplastic polymer ply (12) which includes a wrapped fibre reinforcement, wherein at least one of the inner fibre-reinforced thermoplastic polymer ply (14) and the outer fibre-reinforced thermoplastic polymer ply (12) includes at least one fibre-containing layer (14a-b, 14d-e; 12a-b, 12d-e) and one reinforcement-free layer (14c, 14f; 12c, 12f), wherein the wrapped fibre reinforcement includes at least one fibre tape (4), and the first intermediate ply (13) is provided with at least one channel (20) oriented axially.

2. The multilayer pipeline (1) in accordance with claim 1, wherein the first intermediate ply (13) is formed of an expanded thermoplastic polymer material.

3. The multilayer pipeline (1) in accordance with claim 1, wherein the multilayer pipeline (1) further includes a second intermediate ply (15) which is formed of a third thermoplastic polymer material.

4. The multilayer pipeline (1) in accordance with claim 3, wherein the second intermediate ply (15) is provided with at least one channel (20) oriented axially.

5. The multilayer pipeline (1) in accordance with claim 1 or 4, wherein the cross section (20) of the channel is substantially circular.

6. The multilayer pipeline (1) in accordance with claim 1 or 4, wherein the cross section of the channel (20) is substantially oblong.

7. The multilayer pipeline (1) in accordance with claim 1 or 4, wherein the cross section of the channel is substantially trapezoidal.

8. The multilayer pipeline (1) in accordance with claim 4, wherein the second intermediate ply (15) is provided with at least one heater element (20, 22) oriented axially.

9. The multilayer pipeline (1) in accordance with claim 1, wherein the multilayer pipeline (1) includes at least one optical-fibre cable (6) extending in the longitudinal direction of the multilayer pipeline (1), and the at least one optical-fibre cable (6) is positioned in at least one of the plies (11; 12; 13; 14).

10. The multilayer pipeline (1) in accordance with claim 1, wherein the multilayer pipeline (1) includes at least one optical-fibre cable (6) extending in the longitudinal direction of the multilayer pipeline (1), and the at least one optical-fibre cable (6) is positioned in at least one of the plies (11; 12; 13; 14; 15).

11. A machine assembly (30) for the manufacturing of an endless multilayer pipeline (1) including an inner fluid-tight ply (11) that is formed of a first thermoplastic material, wherein the machine assembly (30) includes:
- a first wrapping-machine station (350); wherein the first wrapping-machine station (350) includes at least: one reel carousel (352a) which is arranged to wrap fibre tape (4) around the inner fluid-tight ply (11) to form a fibre-reinforced layer (14a) of an inner fibre-reinforced polymer ply (14); and an extruder (320) arranged to form a reinforcement-free layer (14c) of a thermoplastic polymer material which surrounds the layer (14a);
- an extruder (330) arranged to form a first intermediate ply (13) which comprises a thermoplastic polymer material and which surrounds the inner fibre-reinforced ply (14), wherein the first intermediate ply (13) is provided with at least one channel (20) oriented axially; and
- a second wrapping-machine station (360); wherein the second wrapping-machine station (360) includes at least: one reel carousel (362a) which is arranged to wrap fibre tape (4) around the other plies (11, 13, 14) of the multilayer pipeline (1) to form a fibre-reinforced layer (12a) of an outer fibre-reinforced polymer ply (12); and an extruder (340) arranged to form a reinforcement-free layer (12c) from a thermoplastic polymer material, surrounding the layer (12a).

12. The machine assembly (30) in accordance with claim 11, wherein the extruder (330) is composed of an extruder (370) provided with an extruder head (371), in which, in an annular space (374) formed between the calibration element (378) of the extruder head (371) and the multilayer pipeline (1) accommodated in the extruder head (371), at least one mandrel (379) is positioned for the formation of the axially oriented channel (20) in the first intermediate ply (13).

13. The machine assembly (30) in accordance with claim 11, wherein the machine assembly (30) further includes an extruder (370) arranged to form a second intermediate ply (15) which is formed of a third thermoplastic polymer material, the second intermediate ply (15) being positioned in an optional order: between the second, inner fibre ply (14) and the first intermediate ply (13), or between the first intermediate ply (13) and the outer fibre-reinforced polymer ply (12).

14. The machine assembly (30) in accordance with claim 13, wherein the extruder (370) is provided with an extruder head (371), in which, in an annular space (374) formed between the calibration element (378) of the extruder head (371) and the multilayer pipeline (1) accommodated in the extruder head (371), at least one mandrel (379) is positioned for the formation of an axially oriented channel (20) in the second intermediate ply (15).

15. The machine assembly (30) in accordance with claim 11, wherein the machine assembly (30) further includes an extruder (310) arranged to form the inner fluid-tight ply (11) which is formed of a first, thermoplastic polymer material.

16. The machine assembly (30) in accordance with claim 11 or 13, wherein the machine assembly (30) further includes at least one reel (5) arranged to accommodate an optical-fibre cable (6).

17. The machine assembly (30) in accordance with claim 16 wherein the at least one reel (5) is arranged to feed an optical-fibre cable (6) into the extruder (340).

18. The machine assembly (30) in accordance with claim 15 and 16, wherein the at least one reel (5) is arranged to feed an optical-fibre cable (6) into the extruder (310).

19. A method for forming an endless multilayer pipeline (1), wherein the method includes the steps of:
a) providing an inner fluid-tight ply (11) which is formed of a thermoplastic polymer;
b) forming an inner fibre-reinforced ply (14) around the inner fluid-tight ply (11) by wrapping a fibre tape (4) around the inner fluid-tight ply (11) in order to form at least one fibre layer (14a) and, by means of extrusion, applying a reinforcement-free layer (14c) to the fibre layer (14a),
c) forming, by means of extrusion, a first intermediate polymer ply (13) around the inner fibre-reinforced ply (14), wherein the first intermediate ply (13) is provided with at least one channel (20) oriented axially; and
d) forming an outer fibre-reinforced ply (12) by wrapping a fibre tape (4) around the other plies (11, 13, 14) of the multilayer pipeline (1) to form at least one fibre layer (12a) and, by means of extrusion, applying a reinforcement-free layer (12c) to the fibre layer (12a).

20. The method in accordance with claim 19, wherein the method in step c) further includes providing the extruder head (371) of an extruder (370) in an annular space (374) which is formed between the calibration element (378) of the extruder head (371) and the multilayer pipeline (1) accommodated in the extruder head (371) with at least one mandrel (379) which forms the axially oriented channel (20) in the first intermediate polymer ply (13).

21. The method in accordance with claim 19, wherein the method further includes the step of:
c1) forming, by extrusion, a second intermediate ply (15) which is formed of a third polymer material which is optionally positioned: either between the inner fibre-reinforced ply (14) formed in step b) and the first intermediate polymer ply (13) formed in step c), or between the first intermediate polymer ply (13) formed in step c) and the outer fibre-reinforced ply (12) formed in step d).

22. The method in accordance with claim 21, wherein the method in step c1) further includes providing the extruder head (371) of an extruder (370) in an annular space (374) which is formed between the calibration element (378) of the extruder head (371) and the multilayer pipeline (1) which is accommodated in the extruder head (371), with at least one mandrel (379) which forms an axially oriented channel (20) in the second intermediate polymer ply (15).

23. The method in accordance with claim 19, wherein the method in step a) includes forming, by extrusion, the inner fluid-tight ply (11) which is formed of a thermoplastic polymer.

24. The method in accordance with claim 19, wherein the method includes the use of a machine assembly (30) in accordance with claim 13, and the method further includes positioning the machine assembly (30) on a deck (9) aboard a ship.

## Patentansprüche

1. Endlose mehrschichtige Rohrleitung (1), die wenigstens Folgendes beinhaltet:
- eine innere fluiddichte Lage (11), die aus einem ersten thermoplastischen Polymermaterial gebildet ist;
- eine innere faserverstärkte thermoplastische Polymerlage (14), die eine gewickelte Faserverstärkung beinhaltet und die die innere fluiddichte Lage umgibt;
- eine erste Zwischenlage (13), die aus einem zweiten thermoplastischen Polymermaterial gebildet ist;
- eine äußere faserverstärkte thermoplastische Polymerlage (12), die eine gewickelte Faserverstärkung beinhaltet, wobei
wenigstens eine von der inneren faserverstärkten thermoplastischen Polymerlage (14) und der äußeren faserverstärkten thermoplastischen Polymerlage (12) wenigstens eine faserhaltige Schicht (14a-b, 14d-e; 12a-b, 12d-e) und eine verstärkungsfreie Schicht (14c, 14f; 12c, 12f) beinhaltet, wobei die gewickelte Faserverstärkung wenigstens ein Faserband (4) beinhaltet und die erste Zwischenlage (13) mit wenigstens einem axial ausgerichteten Kanal (20) versehen ist.

2. Mehrschichtige Rohrleitung (1) nach Anspruch 1, wobei die erste Zwischenlage (13) aus einem expandierten thermoplastischen Polymermaterial gebildet ist.

3. Mehrschichtige Rohrleitung (1) nach Anspruch 1, wobei die mehrschichtige Rohrleitung (1) ferner eine zweite Zwischenlage (15) beinhaltet, die aus einem dritten thermoplastischen Polymermaterial gebildet ist.

4. Mehrschichtige Rohrleitung (1) nach Anspruch 3, wobei die zweite Zwischenlage (15) mit wenigstens einem axial ausgerichteten Kanal (20) versehen ist.

5. Mehrschichtige Rohrleitung (1) nach Anspruch 1 oder 4, wobei der Querschnitt (20) des Kanals im Wesentlichen kreisförmig ist.

6. Mehrschichtige Rohrleitung (1) nach Anspruch 1 oder 4, wobei der Querschnitt des Kanals (20) im Wesentlichen länglich ist.

7. Mehrschichtige Rohrleitung (1) nach Anspruch 1 oder 4, wobei der Querschnitt des Kanals im Wesentlichen trapezförmig ist.

8. Mehrschichtige Rohrleitung (1) nach Anspruch 4, wobei die zweite Zwischenlage (15) mit wenigstens einem axial ausgerichteten Heizelement (20, 22) versehen ist.

9. Mehrschichtige Rohrleitung (1) nach Anspruch 1, wobei die mehrschichtige Rohrleitung (1) wenigstens ein Lichtleitkabel (6) beinhaltet, das sich in der Längsrichtung der mehrschichtigen Rohrleitung (1) erstreckt, und wobei das wenigstens eine Lichtleitkabel (6) in wenigstens einer der Lagen (11; 12; 13; 14) angeordnet ist.

10. Mehrschichtige Rohrleitung (1) nach Anspruch 1, wobei die mehrschichtige Rohrleitung (1) wenigstens ein Lichtleitkabel (6) beinhaltet, das sich in der Längsrichtung der mehrschichtigen Rohrleitung (1) erstreckt, und wobei das wenigstens eine Lichtleitkabel (6) in wenigstens einer der Lagen (11; 12; 13; 14; 15) angeordnet ist.

11. Maschinenanordnung (30) zur Herstellung einer endlosen mehrschichtigen Rohrleitung (1), die eine innere fluiddichte Lage (11) beinhaltet, die aus einem ersten thermoplastischen Material gebildet ist, wobei die Maschinenanordnung (30) Folgendes beinhaltet:
- eine erste Wickelmaschinenstation (350); wobei die erste Wickelmaschinenstation (350) wenigstens Folgendes beinhaltet: ein Spulenkarussell (352a), das dafür eingerichtet ist, ein Faserband (4) um die innere fluiddichte Lage (11) zu wickeln, um eine faserverstärkte Schicht (14a) aus einer inneren faserverstärkten Polymerlage (14) zu bilden; und einen Extruder (320), der dafür eingerichtet ist, eine verstärkungsfreie Schicht (14c) aus einem thermoplastischen Polymermaterial zu bilden, die die Schicht (14a) umgibt;
- einen Extruder (330), der dafür eingerichtet ist, eine erste Zwischenlage (13) zu bilden, die ein thermoplastisches Polymermaterial umfasst und die die innere faserverstärkte Lage (14) umgibt, wobei die erste Zwischenlage (13) mit wenigstens einem axial ausgerichteten Kanal (20) versehen ist; und
- eine zweite Wickelmaschinenstation (360); wobei die zweite Wickelmaschinenstation (360) wenigstens Folgendes beinhaltet: ein Spulenkarussell (362a), das dafür eingerichtet ist, ein Faserband (4) um die anderen Lagen (11, 13, 14) der mehrschichtigen Rohrleitung (1) zu wickeln, um eine faserverstärkte Schicht (12a) aus einer äußeren faserverstärkten Polymerlage (12) zu bilden; und einen Extruder (340), der dafür eingerichtet ist, eine verstärkungsfreie Schicht (12c) aus einem thermoplastischen Polymermaterial zu bilden, die die Schicht (12a) umgibt.

12. Maschinenanordnung (30) nach Anspruch 11, wobei der Extruder (330) aus einem Extruder (370) besteht, der mit einem Extruderkopf (371) versehen ist, in welchem, in einem ringförmigen Raum (374), der zwischen dem Kalibrierelement (378) des Extruderkopfs (371) und der in dem Extruderkopf (371) aufgenommenen mehrschichtigen Rohrleitung (1) gebildet ist, wenigstens ein Dorn (379) zur Bildung des axial ausgerichteten Kanals (20) in der ersten Zwischenlage (13) angeordnet ist.

13. Maschinenanordnung (30) nach Anspruch 11, wobei die Maschinenanordnung (30) ferner einen Extruder (370) beinhaltet, der dafür eingerichtet ist, eine zweite Zwischenlage (15) zu bilden, die aus einem dritten thermoplastischen Polymermaterial gebildet ist, wobei die zweite Zwischenlage (15) in einer wahlweisen Reihenfolge zwischen der zweiten, inneren Faserlage (14) und der ersten Zwischenlage (13) oder zwischen der ersten Zwischenlage (13) und der äußeren faserverstärkten Polymerlage (12) angeordnet ist.

14. Maschinenanordnung (30) nach Anspruch 13, wobei der Extruder (370) mit einem Extruderkopf (371) versehen ist, in welchem, in einem ringförmigen Raum (374), der zwischen dem Kalibrierelement (378) des Extruderkopfs (371) und der in dem Extruderkopf (371) aufgenommenen mehrschichtigen Rohrleitung (1) gebildet ist, wenigstens ein Dorn (379) zur Bildung eines axial ausgerichteten Kanals (20) in der zweiten Zwischenlage (15) angeordnet ist.

15. Maschinenanordnung (30) nach Anspruch 11, wobei die Maschinenanordnung (30) ferner einen Extruder (310) beinhaltet, der dafür eingerichtet ist, die innere fluiddichte Lage (11) zu bilden, die aus einem ersten thermoplastischen Polymermaterial gebildet ist.

16. Maschinenanordnung (30) nach Anspruch 11 oder 13, wobei die Maschinenanordnung (30) ferner wenigstens eine Spule (5) beinhaltet, die dafür eingerichtet ist, ein Lichtleitkabel (6) aufzunehmen.

17. Maschinenanordnung (30) nach Anspruch 16, wobei die wenigstens eine Spule (5) dafür eingerichtet ist, ein Lichtleitkabel (6) dem Inneren des Extruders (340) zuzuführen.

18. Maschinenanordnung (30) nach Anspruch 15 und 16, wobei die wenigstens eine Spule (5) dafür eingerichtet ist, ein Lichtleitkabel (6) dem Inneren des Extruders (310) zuzuführen.

19. Verfahren zum Bilden einer endlosen mehrschichtigen Rohrleitung (1), wobei das Verfahren die folgenden Schritte umfasst:
a) Bereitstellen einer inneren fluiddichten Lage (11), die aus einem thermoplastischen Polymer gebildet ist;
b) Bilden einer inneren faserverstärkten Lage (14) um die innere fluiddichte Lage (11), indem ein Faserband (4) um die innere fluiddichte Lage (11) gewickelt wird, um wenigstens eine Faserschicht (14a) zu bilden, und indem mithilfe von Extrusion eine verstärkungsfreie Schicht (14c) auf der Faserschicht (14a) angebracht wird,
c) Bilden, mithilfe von Extrusion, einer ersten Zwischen-Polymerlage (13) um die innere faserverstärkte Lage (14), wobei die erste Zwischenlage (13) mit wenigstens einem axial ausgerichteten Kanal (20) versehen ist; und
d) Bilden einer äußeren faserverstärkten Lage (12), indem ein Faserband (4) um die anderen Lagen (11, 13, 14) der mehrschichtigen Rohrleitung (1) gewickelt wird, um wenigstens eine Faserschicht (12a) zu bilden, und indem mithilfe von Extrusion eine verstärkungsfreie Schicht (12c) auf der Faserschicht (12a) angebracht wird.

20. Verfahren nach Anspruch 19, wobei das Verfahren in Schritt c) ferner beinhaltet, den Extruderkopf (371) eines Extruders (370) in einem ringförmigen Raum (374), der zwischen dem Kalibrierelement (378) des Extruderkopfs (371) und der in dem Extruderkopf (371) aufgenommenen mehrschichtigen Rohrleitung (1) gebildet ist, mit wenigstens einem Dorn (379) zu versehen, der den axial ausgerichteten Kanal (20) in der ersten Zwischen-Polymerlage (13) bildet.

21. Verfahren nach Anspruch 19, wobei das Verfahren ferner den folgenden Schritt beinhaltet:
c1) Bilden, durch Extrusion, einer aus einem dritten Polymermaterial gebildeten zweiten Zwischenlage (15), die wahlweise entweder zwischen der in Schritt b) gebildeten inneren faserverstärkten Lage (14) und der in Schritt c) gebildeten ersten Zwischen-Polymerlage (13) oder zwischen der in Schritt c) gebildeten ersten Zwischen-Polymerlage (13) und der in Schritt d) gebildeten äußeren faserverstärkten Lage (12) angeordnet ist.

22. Verfahren nach Anspruch 21, wobei das Verfahren in Schritt c1) ferner beinhaltet, den Extruderkopf (371) eines Extruders (370) in einem ringförmigen Raum (374), der zwischen dem Kalibrierelement (378) des Extruderkopfs (371) und der in dem Extruderkopf (371) aufgenommenen mehrschichtigen Rohrleitung (1) gebildet ist, mit wenigstens einem Dorn (379) zu versehen, der einen axial ausgerichteten Kanal (20) in der zweiten Zwischen-Polymerlage (15) bildet.

23. Verfahren nach Anspruch 19, wobei das Verfahren in Schritt a) das Bilden der inneren fluiddichten Lage (11), die aus einem thermoplastischen Polymer gebildet ist, durch Extrusion beinhaltet.

24. Verfahren nach Anspruch 19, wobei das Verfahren die Verwendung einer Maschinenanordnung (30) nach Anspruch 13 beinhaltet und das Verfahren ferner das Anordnen der Maschinenanordnung (30) auf einem Deck (9) an Bord eines Schiffes beinhaltet.

## Revendications

1. Canalisation multicouche sans fin (1) qui inclut au moins :
- un pli intérieur étanche aux fluides (11) qui est formé en un premier matériau polymère thermoplastique ;
- un pli polymère thermoplastique intérieur renforcé par fibres (14) qui inclut un renforcement par fibres enroulées et qui entoure le pli intérieur étanche aux fluides ;
- un premier pli intermédiaire (13) qui est formé en un deuxième matériau polymère thermoplastique ;
- un pli polymère thermoplastique extérieur renforcé par fibres (12) qui inclut un renforcement par fibres enroulées,
dans laquelle l'au moins l'un du pli polymère thermoplastique intérieur renforcé par fibres (14) et du pli polymère thermoplastique extérieur renforcé par fibres (12) inclut au moins une couche contenant des fibres (14a-b, 14d-e ; 12a-b, 12d-e) et une couche dépourvue de renforcement (14c, 14f ; 12c, 12f), dans laquelle le renforcement par fibres enroulées inclut au moins un ruban de fibres (4), et le premier pli intermédiaire (13) est pourvu d'au moins un canal (20) orienté axialement.

2. Canalisation multicouche (1) selon la revendication 1, dans laquelle le premier pli intermédiaire (13) est formé en un matériau polymère thermoplastique expansé.

3. Canalisation multicouche (1) selon la revendication 1, dans laquelle la canalisation multicouche (1) inclut en outre un deuxième pli intermédiaire (15) qui est formé en un troisième matériau polymère thermoplastique.

4. Canalisation multicouche (1) selon la revendication 3, dans laquelle le deuxième pli intermédiaire (15) est pourvu d'au moins un canal (20) orienté axialement.

5. Canalisation multicouche (1) selon la revendication 1 ou 4, dans laquelle la coupe transversale (20) du canal est sensiblement circulaire.

6. Canalisation multicouche (1) selon la revendication 1 ou 4, dans laquelle la coupe transversale du canal (20) est sensiblement oblongue.

7. Canalisation multicouche (1) selon la revendication 1 ou 4, dans laquelle la coupe transversale du canal est sensiblement trapézoïdale.

8. Canalisation multicouche (1) selon la revendication 4, dans laquelle le deuxième pli intermédiaire (15) est pourvu d'au moins un élément chauffant (20, 22) orienté axialement.

9. Canalisation multicouche (1) selon la revendication 1, dans laquelle la canalisation multicouche (1) inclut au moins un câble de fibre optique (6) s'étendant dans la direction longitudinale de la canalisation multicouche (1), et l'au moins un câble de fibre optique (6) est positionné dans au moins l'un des plis (11 ; 12 ; 13 ; 14).

10. Canalisation multicouche (1) selon la revendication 1, dans laquelle la canalisation multicouche (1) inclut au moins un câble de fibre optique (6) s'étendant dans la direction longitudinale de la canalisation multicouche (1), et l'au moins un câble de fibre optique (6) est positionné dans au moins l'un des plis (11 ; 12 ; 13 ; 14).

11. Assemblage de machines (30) pour la fabrication d'une canalisation multicouche sans fin (1) incluant un pli intérieur étanche aux fluides (11) qui est formé en un premier matériau thermoplastique, dans lequel l'assemblage de machines (30) inclut :
- une première station de machine d'enroulement (350) ; dans lequel la première station de machine d'enroulement (350) inclut au moins : un carrousel de bobines (352a) qui est agencé pour enrouler un ruban de fibres (4) autour du pli intérieur étanche aux fluides (11) pour former une couche renforcée par fibres (14a) d'un pli polymère intérieur renforcé par fibres (14) ; et une extrudeuse (320) agencée pour former une couche dépourvue de renforcement (14c) d'un matériau polymère thermoplastique qui entoure la couche (14a) ;
- une extrudeuse (330) agencée pour former un premier pli intermédiaire (13) qui comprend un matériau polymère thermoplastique et qui entoure le pli intérieur renforcé par fibres (14), dans lequel le premier pli intermédiaire (13) est pourvu d'au moins un canal (20) orienté axialement ; et
- une deuxième station de machine d'enroulement (360) ; dans lequel la deuxième station de machine d'enroulement (360) inclut au moins : un carrousel de bobines (362a) qui est agencé pour enrouler un ruban de fibres (4) autour des autres plis (11, 13, 14) de la canalisation multicouche (1) pour former une couche renforcée par fibres (12a) d'un pli polymère extérieur renforcé par fibres (12) ; et une extrudeuse (340) agencée pour former une couche dépourvue de renforcement (12c) d'un matériau polymère thermoplastique entourant la couche (12a).

12. Assemblage de machines (30) selon la revendication 11, dans lequel l'extrudeuse (330) est composée d'une extrudeuse (370) pourvue d'une tête d'extrudeuse (371), dans laquelle, dans un espace annulaire (374) formé entre l'élément d'étalonnage (378) de la tête d'extrudeuse (371) et la canalisation multicouche (1) accueillie dans la tête d'extrudeuse (371), au moins un mandrin (379) est positionné pour la formation du canal orienté axialement (20) dans le premier pli intermédiaire (13).

13. Assemblage de machines (30) selon la revendication 11, dans lequel l'assemblage de machines (30) inclut en outre une extrudeuse (370) agencée pour former un deuxième pli intermédiaire (15) qui est formé en un troisième matériau polymère thermoplastique, le deuxième pli intermédiaire (15) étant positionné dans un ordre facultatif : entre le deuxième pli intérieur de fibres (14) et le premier pli intermédiaire (13), ou entre le premier pli intermédiaire (13) et le pli polymère extérieur renforcé par fibres (12).

14. Assemblage de machines (30) selon la revendication 13, dans lequel l'extrudeuse (370) est pourvue d'une tête d'extrudeuse (371), dans laquelle, dans un espace annulaire (374) formé entre l'élément d'étalonnage (378) de la tête d'extrudeuse (371) et la canalisation multicouche (1) accueillie dans la tête d'extrudeuse (371), au moins un mandrin (379) est positionné pour la formation d'un canal orienté axialement (20) dans le deuxième pli intermédiaire (15).

15. Assemblage de machines (30) selon la revendication 11, dans lequel l'assemblage de machines (30) inclut en outre une extrudeuse (310) agencée pour former le pli intérieur étanche aux fluides (11) qui est formé en un premier matériau polymère thermoplastique.

16. Assemblage de machines (30) selon la revendication 11 ou 13, dans lequel l'assemblage de machines (30) inclut en outre au moins une bobine (5) agencée pour accueillir un câble de fibre optique (6).

17. Assemblage de machines (30) selon la revendication 16, dans lequel l'au moins une bobine (5) est agencée pour apporter un câble de fibre optique (6) dans l'extrudeuse (340).

18. Assemblage de machines (30) selon les revendications 15 et 16, dans lequel l'au moins une bobine (5) est agencée pour apporter un câble de fibre optique (6) dans l'extrudeuse (310).

19. Procédé de formation d'une canalisation multicouche sans fin (1), dans lequel le procédé inclut les étapes de :
a) fourniture d'un pli intérieur étanche aux fluides (11) qui est formé en un polymère thermoplastique ;
b) formation d'un pli intérieur renforcé par fibres (14) autour du pli intérieur étanche aux fluides (11) en enroulant un ruban de fibres (4) autour du pli intérieur étanche aux fluides (11) afin de former au moins une couche de fibres (14a) et, au moyen d'une extrusion, application d'une couche dépourvue de renforcement (14c) à la couche de fibres (14a) ;
c) formation, au moyen d'une extrusion, d'un premier pli polymère intermédiaire (13) autour du pli intérieur renforcé par fibres (14), dans lequel le premier pli intermédiaire (13) est pourvu d'au moins un canal (20) orienté axialement ; et
d) formation d'un pli extérieur renforcé par fibres (12) en enroulant un ruban de fibres (4) autour des autres plis (11, 13, 14) de la canalisation multicouche (1) pour former au moins une couche de fibres (12a) et, au moyen d'une extrusion, application d'une couche dépourvue de renforcement (12c) à la couche de fibres (12a).

20. Procédé selon la revendication 19, dans lequel le procédé à l'étape c) inclut en outre la fourniture de la tête d'extrudeuse (371) d'une extrudeuse (370) dans un espace annulaire (374) qui est formé entre l'élément d'étalonnage (378) de la tête d'extrudeuse (371) et la canalisation multicouche (1) accueillie dans la tête d'extrudeuse (371) avec au moins un mandrin (379) qui forme le canal orienté axialement (20) dans le premier pli polymère intermédiaire (13).

21. Procédé selon la revendication 19, dans lequel le procédé inclut en outre l'étape de :
c1) formation, par extrusion, d'un deuxième pli intermédiaire (15) qui est formé en un troisième matériau polymère qui est facultativement positionné : soit entre le pli intérieur renforcé par fibres (14) formé à l'étape b) et le premier pli polymère intermédiaire (13) formé à l'étape c), soit entre le premier pli polymère intermédiaire (13) formé à l'étape c) et le pli extérieur renforcé par fibres (12) formé à l'étape d).

22. Procédé selon la revendication 21, dans lequel le procédé à l'étape c1) inclut en outre la fourniture de la tête d'extrudeuse (371) d'une extrudeuse (370) dans un espace annulaire (374) qui est formé entre l'élément d'étalonnage (378) de la tête d'extrudeuse (371) et la canalisation multicouche (1) qui est accueillie dans la tête d'extrudeuse (371), avec au moins un mandrin (379) qui forme un canal orienté axialement (20) dans le deuxième pli polymère intermédiaire (15).

23. Procédé selon la revendication 19, dans lequel le procédé à l'étape a) inclut la formation, par extrusion, du pli intérieur étanche au fluide (11) qui est formé en un polymère thermoplastique.

24. Procédé selon la revendication 19, dans lequel le procédé inclut l'utilisation d'un assemblage de machines (30) selon la revendication 13, et le procédé inclut en outre le positionnement de l'assemblage de machines (30) sur un pont (9) à bord d'un bateau.
